# DEMANDE DE BREVET EUROPEEN

(11) **EP 2 008 528 A1**
(43) Date de publication de la demande: **31.12.2008**
(21) Numéro de dépôt: 08102634.6
(22) Date de dépôt: 14.03.2008
(51) Int. Cl.: A23G 1/00, A23G 1/54, A23G 3/00, A23G 9/48

(54) **Composition alimentaire**

(30) Priorité: 20.06.2007 EP 07110706
(71) Demandeur: Merckx, Eddy, 1970 Wezembeek-Oppem (BE)
(72) Inventeur: Merckx, Eddy, 1970 Wezembeek-Oppem (BE)
(74) Mandataire: pronovem

(57) **Abrégé**

La présente invention est relative à une nouvelle composition alimentaire présentant une structure solide comprenant un coeur, enrobé d'une première couche en chocolat et d'une seconde couche en saccharides sur laquelle il est possible d'additionner des impressions de colorants alimentaires, à servir d'éléments publicitaires. Ladite composition peut en outre incorporer des produits alimentaires solides, glacés ou liquides.

## Description

### Objet de l'invention

La présente invention est relative à une nouvelle composition alimentaire présentant une structure solide sur laquelle il est possible d'additionner des impressions de colorants alimentaires pour servir d'éléments publicitaires ou de décoration. Ladite composition peut en outre incorporer des produits alimentaires solides, glacés ou liquides.

### Arrière Plan technologique et Etat de la technique à la base de l'invention

Un produit alimentaire peut servir de support publicitaire en tant que tel, car il est possible d'imprimer sur ce produit alimentaire des supports publicitaires inscrits sous forme de lettres, de dessins, de chiffres ou de photos.

Il est notamment connu d'imprimer des logos sur des biscuits ou d'autres éléments de confiserie tels que des chocolats. Cependant, un certain nombre de produits alimentaires congelés ou liquides ne sont pas adéquats pour permettre une impression d'éléments publicitaires. De plus, ces produits sous forme glacée ou sous forme liquide ont souvent des durées limites de conservation (DLC) assez courtes ce qui limite également leur usage à titre de produits publicitaires.

### Buts de l'invention

la présente invention vise à fournir un produit et son procédé d'obtention qui présente une structure extérieure, dragée vide et solide qui puisse être utilisé comme support publicitaire.

La présente invention vise aussi à fournir un tel produit et son procédé d'obtention qui soit apte à contenir et à améliorer la durée de conservation des produits alimentaires sous forme solide (congelée ou non) ou liquide tels que de la crème glacée, du chocolat, du bavarois, du foie gras etc.

### Eléments caractéristiques de l'invention

La présente invention est relative à une composition alimentaire présentant une structure solide et comportant
- un coeur 1
- enrobé d'au moins une couche 2 de chocolat (ou un dérivé du chocolat) solide ayant une épaisseur homogène, de préférence une épaisseur comprise entre environ 1,5 et environ 4 mm en chocolat solide, plus particulièrement une épaisseur de l'ordre de (environ)2,5 mm et
- enrobé d'une ou plusieurs couches externes 3 de saccharides, de préférence de glucose, de saccharose (sucrose), de fructose, de polyols (xylitol, maltitol, lactitol), de maltodextrines, d'amidon, de gommes arabiques, de fructoligosaccharides et/ou d'éventuellement d'autres produits de synthèse ayant un pouvoir sucrant (tels que l'aspartame, la saccharine, ...) et dont l'épaisseur est inférieure à environ 1 mm, de préférence de l'ordre de 0,5 mm.

La structure solide de la composition alimentaire de l'invention peut présenter différentes formes : cubique, sphérique, ovoïde, mais est de préférence sous une forme sphérique creuse ou essentiellement sphérique, c'est-à-dire éventuellement de type ovoïde ou plus spécifiquement en forme d'objet sportif, tel que un ballon de rugby ou de football, une balle de tennis ou de golf, etc. ou de personnage de bande dessinée ou de dessin animé.

Selon une première forme d'exécution de l'invention, le coeur 1 de la composition alimentaire de l'invention comporte ou est constitué d'un gaz, tel que de l'air et ne comporte aucun élément solide ou liquide.

Selon une variante d'exécution de l'invention, le coeur de la structure solide de la composition alimentaire de l'invention est rempli d'un élément liquide ou solide, de préférence un produit caractérisé par une durée limite de conservation (DLC) courte, par exemple une préparation pour une crème glacée incorporant éventuellement un ou plusieurs parfums. De préférence cette crème glacée est conservée dans le coeur sous une forme solide, c'est-à-dire sous une forme gélifiée (non glacée) à une température positive et inférieure à 4°C ou sous une forme glacée à une température inférieure à - 18°C.

Selon une troisième variante d'exécution de l'invention, le coeur de la structure solide formant la composition alimentaire de l'invention est constitué d'une préparation liquide à base de chocolat ou d'autres ingrédients alimentaires tels que des alcools, des purées de fruits, des fruits, du bavarois ou du foie gras.

La forme de la structure solide formant la composition alimentaire de l'invention peut présenter différentes tailles, mais a de préférence un diamètre inférieur à environ 10 cm de préférence inférieur à 8 cm plus particulièrement inférieur à 5 cm mais de préférence supérieur à 1 cm, 2 cm ou 3 cm.

Selon une variante d'exécution de l'invention la composition alimentaire présente une structure solide en chocolat ou un produit dérivé du chocolat ayant un diamètre inférieur à 2 cm, de préférence inférieur à 1 cm, mais de préférence supérieur à 3 mm ou à 5 mm plus particulièrement compris entre environ 1 cm et environ 5 mm et comprenant un coeur constitué de crème de lait et/ou de sucre et d'éventuellement un ou plusieurs arômes. La composition présente une épaisseur de couches suffisamment fine pour permettre une dissolution rapide par un consommateur dans un liquide chaud (ayant une température supérieure à 35°C, 40°C, 50°C, voire 60°C ou 70°C).

Dans ce cas, la composition alimentaire sera conservée dans un emballage adéquat, de type emballage pour bonbons et pourra être servie avec du café, du thé ou du chocolat chaud.

Le coeur de la composition alimentaire pourra éventuellement comporter également l'addition de 1 ou plusieurs produits sucrants, en particulier de 1 ou plusieurs saccharides (glucose, saccharose, sucrose, fructose, polyols, maltodextrines, amidon, gommes arabiques, fructoligosaccharides etc.)

Dans la composition alimentaire de l'invention la couche 2 peut être constituée de chocolat ou d'un produit à base de chocolat ou un produit dérivé du chocolat au lait, blanc, noir avec ou sans fragments de noisettes, de noix, d'amandes, de paillettes de chocolat, avec des parfums, des extraits de plantes (thé, café,...) de la crème fraîche et des alcools.

De préférence, cette couche 3 est une couche de saccharides (tels que du fructose, du glucose, du saccharose (sucrose), des polyols, des gommes arabiques, de l'amidon, des maltodextrines, des fructoligosaccharides, etc.) de préférence du sucre blanc comportant éventuellement un ou plusieurs colorants alimentaires. Cette couche de saccharides 3 présente de manière avantageuse à sa surface différentes illustrations telles que des dessins, des lettres ou des chiffres aptes à former un logo ou une photo.

En outre, cette couche de saccharides 3 peut également comporter un vernissage à la cire avant ou après l'addition des colorants alimentaires formant le logo pour protéger la couche de sucre de l'humidité à la surface extérieure de la structure solide formant la composition alimentaire de l'invention.

En outre, cette dite structure solide peut comporter également un ou plusieurs éléments incrustés dans une ou plusieurs des couches. Ces éléments peuvent par exemple être des anneaux, des éléments de support tels que des tiges en matière alimentaire (pain, sucre, chocolat, etc.) en plastique, en métal ou en bois pour faciliter la manipulation de ladite structure solide ou sa décoration.

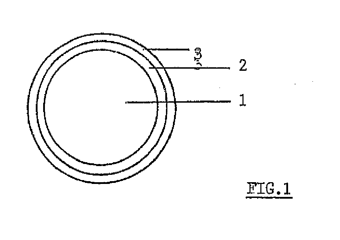

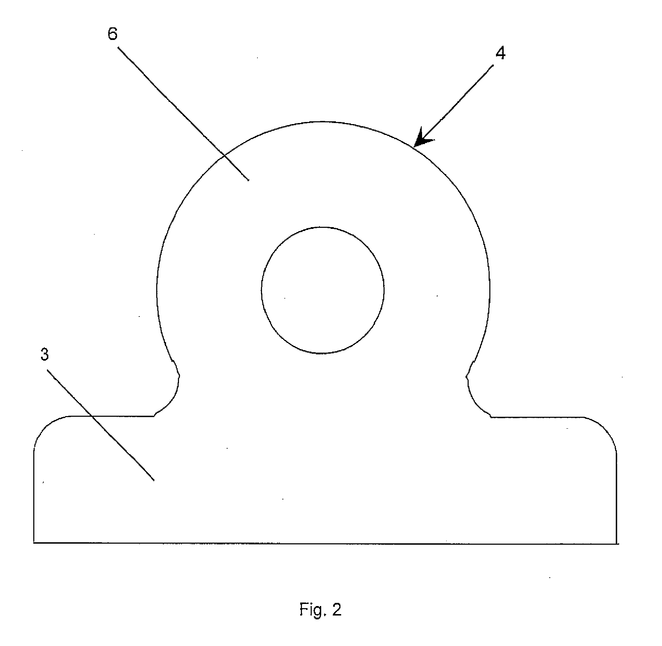

Selon une forme d'exécution préférée de l'invention cet élément 4 réalisé en chocolat est celui représenté à la figure 2, c'est à dire un anneau 6 comportant une base 5 élargie (par rapport au diamètre de l'anneau 6) pouvant être chauffée et être apte à entrer en contact avec l'ouverture d'une perforation introduite dans la structure solide, en particulier introduite dans la couche 2 de chocolat solide et la couche externe 3 de saccharides afin d'obturer cette ouverture.

Des tiges en bois peuvent être par exemple celles utilisées pour les crèmes glacées (bâton type « Esquimau »).

Avantageusement la préparation pour crème glacée présente dans la structure solide formant la composition alimentaire de l'invention occupe la majorité du coeur enrobé de la couche de chocolat, c'est-à-dire qu'elle occupe la majorité du volume formé par ce coeur (plus de 70%, 80%, 90%, 95%, de préférence plus de 96%, plus particulièrement plus de 97%, 98% ou 99%, voire la totalité du volume du coeur).

Cette préparation pour crème glacée est de préférence obtenue par foisonnement à froid et maturation de façon à éviter une cristallisation des particules d'eau et à garder les arômes de manière uniforme dans ladite crème glacée englobée dans la structure solide.

Un autre aspect de la présente invention concerne le procédé d'obtention de la composition alimentaire de l'invention. Celle-ci comporte essentiellement trois étapes : une formation de la couche 2 de chocolat et sa dragéification (à vide) par une couche externe 3 en saccharides sur la couche de chocolat, une éventuelle impression (circulaire) de la surface de la couche 3 en saccharides et une éventuelle incorporation de la préparation pour crème glacée dans le coeur 1 à posteriori.

La première étape dénommée « dragéification à vide » vise à obtenir un corps creux en chocolat, ledit chocolat étant traité à une température adéquate (de l'ordre de 31°C), par tempérage, pour assurer son dépôt sur des moules.

Il est possible d'incorporer le chocolat dans un moule et le soumettre à une rotation « planétaire » pour former en une étape une couche de chocolat 2 ayant l'épaisseur homogène adéquate. Dans ce cas, on forme une pièce en chocolat de type « oeuf de Pâques ».

Ensuite, on effectue une dragéification de la couche de chocolat c'est-à-dire que l'on introduit les pièces de chocolat obtenues pour effectuer un dépôt de couches de saccharides 3 successives sur la surface extérieure de la pièce en chocolat. Ces couches de saccharides successives sont de préférence constituées de glucose déposé en couches à chaud ou à froid jusqu'à former une couche ayant une épaisseur inférieure à 1 mm, de préférence supérieure à 0,1 mm.

Cette opération consiste à créer un revêtement dur cristallin à la surface de produits solides ou pulvérulents afin de les protéger pour diverses raisons et afin de les rendre attractifs visuellement et gustativement. Généralement, cette opération unitaire est réalisée en plaçant de tels produits en tant que noyaux à revêtir (dans le présent cas le chocolat), dans une turbine de dragéification. Elle nécessite souvent l'utilisation d'un sirop ou d'une suspension contenant des matières cristallisables constituées de différents saccharides. Le revêtement dur et cristallin s'obtient alors par application de ce sirop ou de cette suspension sur les noyaux et l'évaporation de l'eau apportée par ceux-ci, grâce à un séchage par air froid et sec, ce qui provoque la cristallisation. Le cycle peut être répété un très grand nombre de fois afin d'obtenir le taux de grossissage voulu. (Dans le présent cas, une couche de saccharides ayant une épaisseur inférieure à 1 mm).

L'étape d'une dragéification dure s'effectue par une étape de gommage au moyen d'un sirop de gommage présentant plus ou moins 60% de matière sèche (dont 45% de sucre et 15% d'hydrocolloides) qui permet un mouillage régulier et prépare l'adhésion du sirop de dragéification. Le gommage est suivi d'un saupoudrage et d'un séchage qui consiste en une addition de sucre glacé (sucre fin, amidon ou gomme arabique) qui permet une déshydratation rapide par entraînement à l'air à une température comprise entre environ 20°C et 40°C et permet ainsi une stabilisation de transfert d'eau.

Ensuite, le produit soumis à un grossissage c'est à dire un enrobage progressif par charge successive de sirop saturé comprenant entre 75% et 80% de matière sèche. Ce sirop est constitué de préférence de saccharose (sucrose) et est suivi d'une étape de séchage.

Ceci permet une formation d'une pellicule rigide d'environ 10 µm à chaque charge (opération de nucléation et de déshydratation). Ensuite, le produit est soumis à une étape de blanchissage par addition d'un sirop de saccharose (constitué d'environ 72% à 75% de matière sèche) et comprenant de manière avantageuse du dioxyde de titane et de l'amidon (10 à 20 charges). Ainsi, la surface extérieure du produit présente une surface blanche, brillante, séchée jusqu'à une étape de poudrage. On peut aussi effectuer un lissage (qui se fait à l'aide de sirop de saccharose pur, exempt de trace d'amidon ou de glucose froid (comprenant de 70% à 72% de matière sèche) (environ 15 à 20 charges pour obtenir une surface lisse de type porcelaine))et une étape de coloration (par application d'un sirop de sucre pur constitué de 70% à 72% de matière sèche additionné de gommage arabique) pour fixer les colorants solubles dans l'eau, à froid sur une surface lisse. On obtient ainsi différentes couleurs brillantes sur la surface extérieure du produit.

Il est ensuite possible d'obtenir une étape de mouillage, de séchage (mouillage uniforme à froid à 20°C à 25°C) suivi d'une étape de séchage par addition de sucre semoule, sucre surfin ou de sucre glacé qui permet une migration de l'humidité vers la charge de sucre surfin.

Ensuite, un séchage statique (pendant une durée d'environ 24 heures sur des claies) est effectué avant une étape de coloration et d'aromatisation par addition de colorant synthétique soluble dans l'eau sur les différentes couches.

Ensuite, le produit est soumis à une étape de séchage à l'air froid, à une température d'environ 10°C à 12°C et sec (humidité relative < 50%). Le produit peut être encore également soumis à l'addition d'un produit hydrophobe de manière à éviter les transferts d'eau et maintenir l'obtention de l'aspect brillant et le marquage des défauts des produits. La gomme ou laque déposée sur la surface extérieure est une laque présente en solution à environ 10 à 30% dans l'éthanol. Cette étape de polissage nécessite également un entreposage avec ventilation d'air sec pendant une durée significative d'environ 10 à 12 heures de manière à obtenir un produit homogène présentant sur sa surface extérieure un film apportant une barrière hydrophobe permettant d'éviter les transferts d'eau et permettant d'augmenter la stabilité du produit à la chaleur. Ceci est également particulièrement important lorsque le coeur comporte un ou plusieurs produits alimentaires en particulier de la crème glacée.

Ensuite, on imprime un motif sur la couche extérieure de saccharides. De manière avantageuse il est possible d'incorporer aux sucres des colorants alimentaires pour modifier la coloration extérieure de la pièce obtenue. Ensuite, il est possible d'obtenir une impression de la pièce obtenue, de préférence par une impression circulaire sur la plus grande partie de la pièce obtenue par une illustration. Cette impression à l'aide de colorants naturels, permet des représentations graphiques formant des lettres ou des figures (impression de logos ou de photos en particulier de logos d'entreprises). Cette réalisation forme une visualisation « 2D » voire « 3D » d'un logo d'une entreprise. Par une étape d'impression adéquate, il est possible de traiter en quadrichromie une grande partie de la surface extérieure du produit (jusqu'à 80% de la surface arrondie). Cette étape d'impression est de préférence réalisée via une imprimante de type jet d'encre alimentaire, par tempo graphie, par décalcomanie ou manuellement au pinceau.

L'étape ultime consiste à obtenir éventuellement une addition de la préparation pour crème glacée à posteriori, c'est-à-dire une incorporation d'une préparation pour crème glacée dans le coeur 1 enrobé de la couche de chocolat 2 et de la couche de saccharides 3.

Cette opération est de préférence obtenue en mélangeant du sucre, du colorant (E202), du gélifiant et des jaunes d'oeufs ainsi que du lait concentré à ébullition et un mélange d'oeuf/sucre. Le produit est cuit à la nappe et on y rajoute de la crème fraîche, un ou plusieurs conservateurs (E202) et éventuellement des parfums. Le tout est ensuite chauffé à ébullition pour obtenir une homogénéisation à chaud à environ 20 bars et ensuite une maturation de la crème glacée à une température de l'ordre de 4°C. Ensuite, on effectue un foisonnement de la préparation en foisonneur à froid de manière à éviter une cristallisation et obtenir un dosage direct en sortie du foisonneur. Cette procédure permet d'éviter la formation de particules de glace d'eau et de garder l'arôme de manière uniforme dans ladite crème glacée. Toutes ces étapes seront effectuées de manière classique comme pour la préparation d'une crème glacée.

Un ou plusieurs adjuvants peuvent être également ajoutés dans les couches 1, 2 et 3 notamment un ou plusieurs épaississants dans la crème glacée pour lui donner une forme rigide même à haute température (4°C) et ainsi garder le foisonnement jusqu'à la congélation du produit. Un ou plusieurs adjuvants peuvent être également rajoutés au sucre dans la crème glacée ou dans la couche externe pour faciliter l'élasticité de la couche et empêcher une fêlure lors du travail du chocolat.

La préparation (essentiellement liquide) est ensuite introduite dans le coeur 1 de la structure solide formant la composition alimentaire de l'invention par une perforation introduite dans la couche de saccharides 3 et la couche de chocolat 2. Cette perforation est effectuée par des outils connus de l'homme de l'art et aptes à obtenir une perforation adéquate de la couche de saccharides 3 et de chocolat 2 tout en permettant une aspiration en simultané des éléments extraits (copeaux de sucre et copeaux de chocolat, poussière de sucre et poussière de chocolat).

Le remplissage du coeur 1 enrobé de la couche de chocolat 2 et de la couche de saccharides 3 s'effectue par une aspiration de la préparation pour crème glacée placée dans un réservoir en hauteur. L'administration se fait au moyen d'une aiguille d'injection ayant un diamètre de l'ordre de 5 mm pour assurer un remplissage du coeur 1 de la composition alimentaire. Une opération similaire de remplissage peut être également prévue pour l'introduction d'autres éléments liquides ou solides tels que du chocolat liquide, des purées de fruits, du foie gras liquide etc.

Ensuite, on effectue une étape de fermeture de l'ouverture pratiquée par addition d'un élément de fermeture, en particulier d'un bouchon en chocolat présentant un anneau par lequel on arrivera à suspendre le produit de l'invention. Dans ce cas, la base de ce « bouchon » est chauffée de manière à permettre un contact avec la surface du produit et permet l'obturation de la couche de saccharides 3 et la couche de chocolat 2.

Cette étape permet effectivement de suspendre par l'anneau de l'invention des produits d'un poids assez élevé (jusqu'à 500gr).

Selon une alternative de l'invention, on effectue une étape de taraudage conique au moyen d'une visse en sucre qui vient obturer la perforation pratiquée dans la couche de chocolat 2 et la couche de saccharides 3. Ceci s'effectue au moyen d'une visseuse qui permet une introduction d'une visse en sucre tout en évitant un fissurage et une cassure dans la couche de saccharides 3 et/ou la couche de chocolat 2.

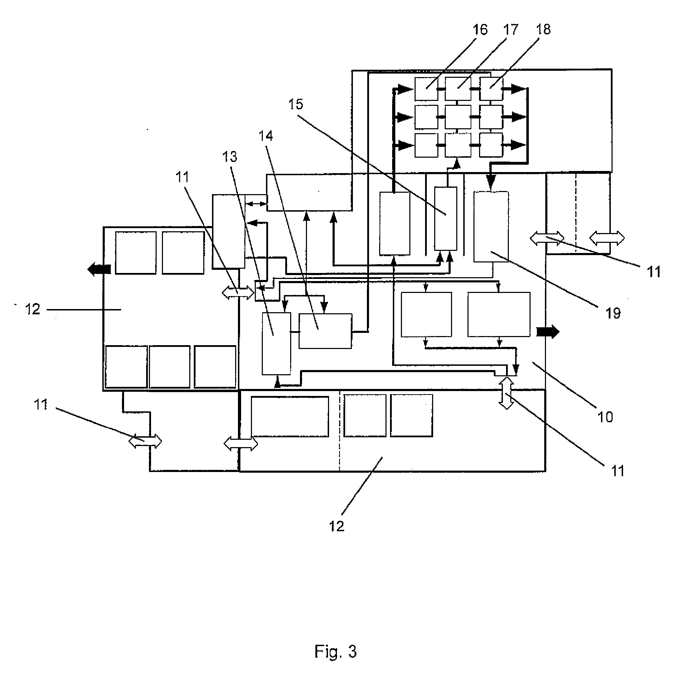

Toutes ces opérations sont effectuées de préférence dans un milieu confiné de type salle blanche telle que représentée à la figure 3. Cette salle blanche comportera différents éléments pour le traitement du produit et ensuite l'addition de la préparation pour crème glacée. Les différents éléments seront déplacés par différents moyens, tels que des bandes transporteuses en fonction de la production.

Toutes les opérations se font sans contamination biologique, éventuellement dans un milieu confiné comparable à celui utilisé dans les industries pharmaceutiques ou cosmétiques (centre GMP). De cette manière, il est possible de garantir une durée limite de conservation allongée (DLC) pour les éléments introduits dans le coeur de la structure solide formant la composition alimentaire de l'invention. La composition alimentaire de l'invention permet par exemple une conservation d'une crème glacée pendant une durée supérieure à 6 semaines voire une durée supérieure à 8 semaines.

Eventuellement une ou plusieurs étapes pourront s'effectuer sous azote (gaz neutre qui permet de diminuer la quantité d'oxygène en contact avec le produit) ce qui permets de limiter l'oxydation en particulier des matières grasses contenues dans la préparation pour crème glacée. On peut également envisager différents mélanges de gaz azote/dioxyde de carbone. Le dioxyde de carbone acidifie le milieu en s'y dissolvant ce qui est un moyen de lutte contre la croissance des micro-organismes. La pression utilisée en azote ou en mélange d'azote/dioxyde de carbone ou avec un autre gaz doit être légèrement supérieure à la pression extérieure d'une machine pour qu'une fuite laisse passer le gaz à l'extérieur et non l'oxygène vers l'intérieur. Le dispositif sera donc éventuellement dans un confinement de type surpression/dépression de manière à éviter toute contamination du milieu extérieur ou toute contamination par le milieu extérieur.

Tel que représenté dans la figure 3, l'installation de l'invention comporte des sas 11 entre les zones de stockage 12 et la salle blanche 10 ou entre l'extérieur et la salle blanche 10. Les étapes de préparation de la couche en chocolat 2 est réalisée dans une mouleuse à chocolat sous pression 13 et un dispositif 14 est prévu pour obtenir l'addition de la couche de saccharides 3 sur la couche de chocolat 2.

On prépare également au niveau d'une machine à glace 15 la préparation pour crème glacée. Ensuite, ces deux produits (produit de l'invention en chocolat et la préparation pour crème glacée) sont déplacés vers un poste de travail où s'effectuent trois étapes (de forage, de remplissage de la préparation pour crème glacée et de collage de l'élément 4 en chocolat sur l'ouverture pratiquée par l'étape de forage) au niveau de trois machines différentes (16, 17, 18). Les produits de l'invention sont ensuite déplacés pour une mise en présentoir 11 dans une zone froide.

Tel que représenté dans la figure 3, les sas 11 permettent l'introduction de produits finis nécessaires pour la préparation des éléments en chocolat, en sucre ou intégrés dans le coeur 1 de la composition de l'invention c'est-à-dire des produits tels que les éléments de la préparation pour crème glacée, du bavarois ou d'autres éléments. Il est également possible d'effectuer un stockage des différents éléments séparés et d'utiliser ces sas 11 pour faciliter l'entrée et la sortie du personnel.

## Revendications

1. Une composition alimentaire présentant une structure solide, comprenant un coeur (1), enrobé d'une première couche (2) en chocolat et d'une seconde couche (3) en saccharides, de préférence, vernissée à la cire.

2. La composition selon la revendication 1, **caractérisée en ce qu'**elle présente une forme sphérique ou ovoïde.

3. La composition selon la revendication 1 ou 2, **caractérisée en ce que** l'épaisseur de la couche (2) en chocolat est comprise entre 1 mm et 5 mm, de préférence entre 2 mm et 4 mm, plus particulièrement de l'ordre de 2,5 mm.

4. La composition selon l'une quelconque des revendications précédentes, **caractérisée en ce que** la couche (3) de saccharides présente une épaisseur inférieure à 1 mm, de préférence de 0,5 mm.

5. La composition selon l'une quelconque des revendications précédentes, **caractérisée en ce que** le coeur (1) comprend un gaz, de préférence de l'air.

6. La composition selon l'une quelconque des revendications précédentes, **caractérisée en ce que** plus de 96%, de préférence plus de 98% du volume du coeur (1) comporte une crème glacée ou une préparation pour crème glacée.

7. La composition selon l'une quelconque des revendications précédentes, **caractérisée en ce que** la couche (3) de saccharides comporte une ou plusieurs illustrations.

8. la composition selon l'une quelconque des revendications précédentes, **caractérisée en ce qu'**elle comporte une ouverture dans la couche (2) en chocolat et la couche (3) en saccharides, ladite ouverture étant obstruée par un élément (4) comportant une base(5)et un anneau (6).

9. La composition selon la revendication 8 **caractérisée en ce** l'élément (4) est réalisé en chocolat.

10. Un procédé d'obtention de la composition alimentaire selon l'une quelconque des revendications précédentes, **caractérisée en ce qu'**elle comporte les étapes suivantes : une dragéification (à vide), éventuellement une impression (circulaire) de la couche (3) de saccharides, et éventuellement une introduction d'une préparation pour crème glacée dans le coeur (1).
